Europäisches Patentamt

**European Patent Office**

Office européen des brevets

(11) Publication number: **0 417 694 B1**

# EUROPEAN PATENT SPECIFICATION

(45) Date of publication of patent specification: **21.12.94**   (51) Int. Cl.5: **B60C 9/00**

(21) Application number: **90117390.6**

(22) Date of filing: **10.09.90**

(54) **Pneumatic radial tire.**

(30) Priority: **11.09.89 JP 232909/89**

(43) Date of publication of application:
**20.03.91 Bulletin 91/12**

(45) Publication of the grant of the patent:
**21.12.94 Bulletin 94/51**

(84) Designated Contracting States:
**DE FR GB**

(56) References cited:
**EP-A- 0 225 055
EP-A- 0 237 462
EP-A- 0 385 666
US-A- 4 836 262**

(73) Proprietor: **THE YOKOHAMA RUBBER CO., LTD.**
**36-11, Shinbashi 5-chome**
**Minato-ku**
**Tokyo, 105 (JP)**

(72) Inventor: **Katoh, Hisao**
**2150, Shindo**
**Hiratsuka-shi,**
**Kanagawa-ken (JP)**
Inventor: **Imamiya, Susumu**
**15-1-4-303, Sumiretaira**
**Hiratsuka-shi,**
**Kanagawa-ken (JP)**

(74) Representative: **VOSSIUS & PARTNER**
**Postfach 86 07 67**
**D-81634 München (DE)**

**Description**

This invention relates to pneumatic radial-ply tires for motor vehicles, more particularly to a steel cord reinforcement therefor.

Advanced pneumatic radial-ply tires for passenger cars as well as heavy-duty automotive vehicles are provided typically with belt layers made up of rubber coated steel cords. Organic fiber cords such as of aramid have also found wide application for the belts of the radial tire but have mostly been accompanied with the use of rubber coated steel cords at least for one belt layer to provide increased rigidity.

While steel cords are suitable for use as belt reinforcement material in view of their high rigidity and strength, the cords being steel are susceptible to corrosion attack by water or moisture permeating through an external injury on the tire which would lead to separation from a coat rubber surrounding the cords and thus pose a durability problem. To solve this problem, there has been proposed a so-called rubber penetrated steel cord having two filaments in the tire core and a strand construction of 2x7, 2x6 and so on having increased filament-to-filament spacing in the outer sheath of the tire. However, such cords literally require so many steel wires that the belt portion of the tire becomes objectionably thick and that this is economically disadvantageous. Cords with less filaments such as of a 2x2 strand were also proposed and put to use. Even simpler cord structures having a 1x2 strand are also known as disclosed for instance in JP-A-62-117893 and JP-A-62-234921. Coat rubber for 1x2 steel cords is desirably low in Mooney viscosity at the time of vulcanization to facilitate filling between the filaments of the cord, and preferably high in modulus after vulcanization to retain flexibility of the cord. These cords however are not quite satisfactory in terms of durability as they are also prone to get corroded by water permeation through-the belt layers to which the cords are applied.

Post-published EP-A-0385666, falling under Art. 54(3) EPC, discloses a pneumatic radial tire wherein a pair of steel filaments are intertwisted together into a steel cord for a belt layer. The filaments each have a certain preform ratio.

With the foregoing problems associated with the prior art in view, research efforts have been made to arrive at the present invention based on the following findings.

(1) Filaments of a 1x2 cord contacted with each other continuously over their entire lengths are liable to relative displacement during use of the tire which would result in small pores or voids formed in proximity to the contact areas.

(2) The above voids are quite small compared to those formed in closed-twist cords but large enough to receive water droplets or water vapor.

(3) The rate of speed of water permeation through the voids is much greater than that of dispersive permeation of water from the tire surfaces.

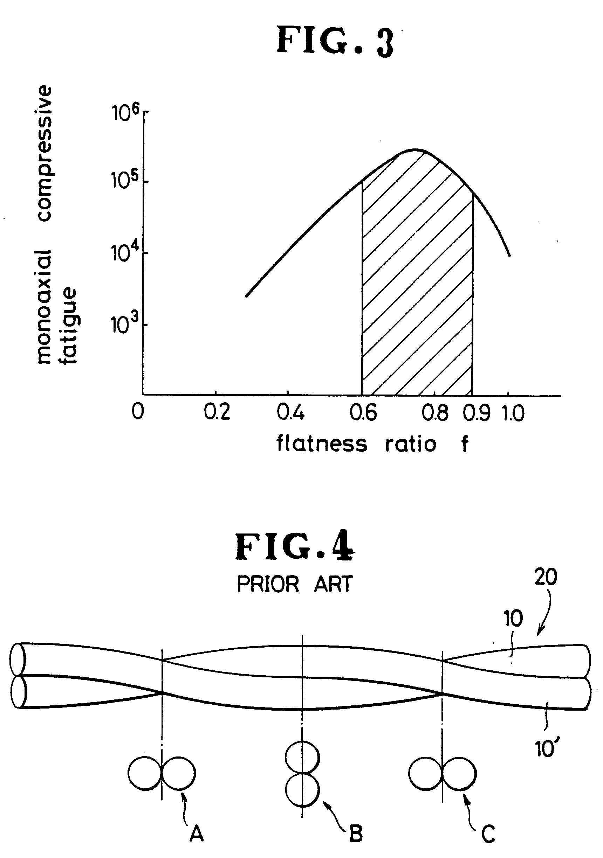

(4) Therefore, water penetrating through external injury into the interior of the tire is apt to permeate longitudinally of the cord, leading to corrosion. Repeated deformation of the belt on running of the tire causes the filaments to scratch each other, resulting is fretting. Hence, conventional 1x2 cords pose a problem associated with anti-corrosive fatigue imposed during moisture absorption. An example of such 1x2 cord is shown in Figure 4, from which it will be seen that the filaments are held continuously in linear contact with each other longitudinally of the cord as indicated at A, B and C.

(5) It is therefore believed effective to intercept the continuity of contact between the two filaments.

(6) Since it is impractical to totally eliminate the contact between two filaments longitudinally of the cord, it would be a more practical approach to provide periodically alternate contact and non-contact areas throughout the length of the cord.

(7) This approach can be implemeated by flattening the cord, as by pressing the cord transversely from one side over its entire length.

Briefly stated, a pneumatic radial tire contemplated under the invention incorporates at least one rubber coated steel cord layer applied for example to a belt portion of the tire, which belt portion if plural in its layer may include other fiber cords such as aramid. The tire may be used for passenger cars or heavy-duty vehicles.

A primary object of the invention resides in the provision of a pneumatic radial tire having a rubber coated steel cord of a 1x2 strand construction which may be effectively applied to the belt, carcass or bead portion of the tire and which is immune to corrosive damage or separation from the rubber layer which would otherwise result from contact with water penetrating through cuts in the tread and permeating longitudinally of the cord, thereby contributing to prolonged service life of the tire.

This object is solved with the features of the claims.

The above and other objects and features will become apparent from the following description taken with reference to the accompanying drawings.

Figure 1 is a diagrammatic side view of a 1x2 steel cord embodying the invention;

Figure 2 is a diagrammatic plan view of the same shown with part in cross-section;

Figure 3 is a graph showing a mono-axial compression fatigue plotted against a flatness ratio; and

Figure 4 is a diagrammatic side view of a prior art 1x2 cord shown with part in cross-section.

A pneumatic radial tire with which the invention is concerned has two steel wire filaments stranded into a 1x2 cord embedded in a rubber coat, the cord having a flatness ratio of $0.6 \leq f \leq 0.9$.

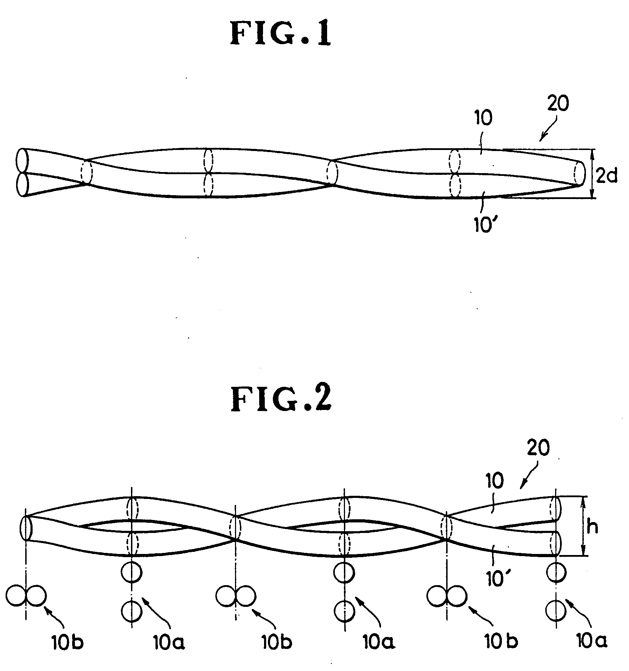

The flatness ratio f, as illustrated in Figures 1 and 2, is defined by $f = 2d/h$ where d is a diameter of a filament 10 and h is a maximum diameter of a cord 20. The flatness ratio f specified above has been found essential to achieve the objective of the invention after extensive experiments and results evaluation.

It has now been found that flatness ratios of a 1x2 steel cord 20 in the range of $0.6 \leq f \leq 0.9$ support the fact that the two constituent filaments 10 and 10' periodically appear with their respective portions completely encompassed by rubber and hence without continuity of bare filament to filament contact areas as cross-sectionally shown at 10a and 10b in Figure 2. This cord characteristic ensures that the attack of water permeating through an external injury of the tire be held to an absolute minimum.

With flatness ratios smaller than 0.6 (f < 0.6), rubber permeation through the cord may be sufficient to an extent to prevent the invasion of water from outside, but the filaments would be subjected to increased deformation and hence to localized strain during run of the tire, resulting in broken filaments. Furthermore, dimensional variations or irregularities would occur in the manufacture of tires.

Whereas, with flatness ratios greater than 0.9 (f > 0.9), rubber permeation would be insufficient and moisture-absorptive fatigue would sharply decline. This is apparent from Figure 2 in which a monoaxial compressive fatigue is plotted against a flatness ratio f of the cord. Compressive fatigue test to determine the durability of the belt portion of the tire is usually performed by an accelerating life tester on which the rubber coated steel cords are subjected to moisture-absorptive deterioration at a temperature of 120°C and a relative humidity of 95% and thereafter repeatedly applied with 5% compressive strain per cord, the number of cycles of repetition of such strain application being counted up to the point of breakage of the cords. This cycle number decreases with rubber coated steel cords having flatness ratios of smaller than 0.6 and larger than 0.9 as shown in Figure 2.

To achieve flatness ratios f in the range of $0.6 \leq f \leq 0.9$, the two starting filaments are preformed prior to twisting and after being twisted, are pressed or crushed to a predetermined extent by means of for example a rectifier roll to undergo cross-sectionally unidirectional plastic deformation with the result that the two filaments 10 and 10' end up with regions 10a completely filled or encompassed by rubbery material periodically alternating with regions 10b where the bare filaments 10 and 10' are in direct contact with each other. The twist lay length, or the twist pitch of the respective filaments, though not specifically limited, may be preferably in the range of 8 mm - 16 mm.

The invention will be further described by way of the following example.

Example

A total of six different pneumatic radial tires Nos. 1 - 6 each of size 195/70 R14 having steel corded belt layers with a twist pitch of 14 mm were mounted on a test car and were inflated to an air pressure of 2 kg/cm$^2$. The car was run on a paved road for a total travel distance of 60,000 kilometers. Each tire had been initially provided with a hole in the tread at two different places reaching the belt layers so as to facilitate permeation of water into the tire on travel. The belt layers were checked for failures with the results listed in the Table in which rubber penetration in the steel cords is represented in percentage by the ratio of the length of filament-to-filament spacing to the length of filaments completely covered with rubber. The length of the cord rusted was measured from the tip end of each hole. Cord breakage was determined by X-ray applied to the tire belt.

It will be seen from the above tabulated test results that Tire Nos. 1, 5 and 6 (controls) having cord flatness ratios f deviating from the specified range of $0.6 \leq f \leq 0.9$ are acceptable in some respects but are unsatisfactory in other respects, in contrast to Tire Nos. 2, 3 and 4 (inventive products) which are satisfactory in all respects of the test owing to compliance with the specified flatness ratios f according to the invention.

Table

| Tire No. | 1 | 2 | 3 | 4 | 5 | 6 |
|---|---|---|---|---|---|---|
| Cord | 1x2x0.30 | 1x2x0.30 | 1x2x0.30 | 1x2x0.30 | 1x2x0.30 | 1x2x0.30 |
| Flatness ratio (f) | 1 | 0.9 | 0.75 | 0.6 | 0.5 | 0.3 |
| Compressive fatigue | $10^4$ | $10^5$ | $10^{5.5}$ | $10^5$ | $10^{4.5}$ | $10^{3.5}$ |
| Rubber penetration (%) | 5 | 90 | 90 | 95 | 95 | 95 |
| Rust length (mm) | 20 | 5 | 3 | 3 | 3 | 3 |
| Cord breakage | yes | no | no | no | yes | yes |

Note: Tire Nos. 2, 3 and 4 are products of the invention.

Tire Nos. 1, 5 and 6 are controls.

## Claims

1. A pneumatic radial tire for automotive vehicles which comprises at least one rubber coated steel cord consisting of a pair of filaments having a flatness ratio f in the range of

4

0.6 ≦ f ≦ 0.9

where f is defined by 2d/h
where d is a diameter of said filament and h is a maximum diameter of said cord, and wherein said cord is flattened by compressive force applied cross-sectionally unidirectionally.

2. A pneumatic radial tire according to claim 1 wherein said filaments are intertwisted with regions completely encompassed by a rubbery material periodically alternating with regions where said filaments are in direct contact with each other.

**Patentansprüche**

1. Radialer Luftreifen für Kraftfahrzeuge, der mindestens ein gummiummanteltes Stahlseil aufweist, das aus zwei Filamenten mit einem Flachheitsquotienten f im Bereich von

0,6 ≦ f ≦ 0,9

besteht, wobei f definiert ist als 2d/h (d: Durchmesser des Filaments; h: maximaler Durchmesser des Seiles); und das Seil mittels Druckkraft abgeplattet wird, die in einer Richtung auf den Querschnitt wirkt.

2. Radialer Luftreifen nach Anspruch 1, wobei die Filamente gegeneinander verdrillt sind und es Bereiche mit vollständiger Gummiummantelung gibt, die periodisch mit Bereichen alternieren, in denen die Filamente miteinander in direkter Berührung sind.

**Revendications**

1. Bandage pneumatique radial pour véhicule automobile qui comprend au moins un câble en acier recouvert de caoutchouc constitué d'une paire de filaments possédant un taux de planéité f dans le domaine de :

0,6 ≦ f ≦ 0,9

où f est défini par 2d/h,
où d est un diamètre dudit filament et h est un diamètre maximal dudit câble et dans lequel ledit câble est aplati par une force de compression qui lui est appliquée dans le sens unidirectionnel de sa section transversale.

2. Bandage pneumatique radial selon la revendication 1, dans lequel lesdits filaments sont intertorsadés avec des régions entièrement recouvertes d'un matériau caoutchouteux alternant périodiquement avec des régions dans lesquelles lesdits filaments se trouvent en contact mutuel direct.

# FIG.1

# FIG.2

# FIG. 3

# FIG.4
## PRIOR ART